# EUROPÄISCHE PATENTSCHRIFT

(11) **EP 3 412 505 B1**
(45) Veröffentlichungstag und Bekanntmachung des Hinweises auf die Patenterteilung: **05.08.2020**
(21) Anmeldenummer: 17174841.1
(22) Anmeldetag: 07.06.2017
(51) Int. Cl.: B60Q 1/04, B60Q 1/26, B29C 45/16

(54) **VERFAHREN ZUR HERSTELLUNG EINES LEUCHTENBAUTEILS MIT ABSTANDSHALTER, ENTSPRECHEND HERGESTELLTES LEUCHTENBAUTEIL, SOWIE MIT EINEM SOLCHEN LEUCHTENBAUTEIL AUSGESTATTETE FAHRZEUGLEUCHTE**
METHOD FOR PRODUCING A LIGHT COMPONENT WITH SPACER, CORRESPONDINGLY MANUFACTURED LIGHT COMPONENT, AND A VEHICLE LAMP FITTING WITH SUCH A LIGHT COMPONENT
PROCÉDÉ DE FABRICATION D'UN ÉLÉMENT STRUCTUREL D'ÉCLAIRAGE COMPRENANT UNE ENTRETOISE, ÉLÉMENT STRUCTUREL D'ÉCLAIRAGE AINSI FABRIQUÉ ET PHARE DE VÉHICULE ÉQUIPÉ D'UN TEL ÉLÉMENT STRUCTUREL D'ÉCLAIRAGE

(43) Veröffentlichungstag der Anmeldung: 12.12.2018
(73) Patentinhaber: odelo GmbH, 70329 Stuttgart (DE)
(72) Erfinder: MELZER, Horst, 71364 Winnenden (DE); WAGNER, Ronny, 73732 Esslingen (DE)
(74) Vertreter: Benninger, Johannes

(56) Entgegenhaltungen:
- DE-A1-102010 060 774
- DE-A1-102015 013 622
- GB-A- 2 424 472
- JP-A- H08 329 701
- US-A- 5 993 036
- US-B1- 6 270 242

## Beschreibung

Die Erfindung betrifft ein Verfahren zur Herstellung eines Leuchtenbauteils gemäß dem Anspruch 1, ein entsprechend einem solchen Verfahren hergestelltes Leuchtenbauteil gemäß Anspruch 7 und eine Fahrzeugleuchte mit einem entsprechend einem solchen Verfahren hergestellten Leuchtenbauteil gemäß dem Anspruch 10.

Insbesondere beschäftigt sich die Erfindung mit der Verbesserung der Anordnung von als Spaltbegrenzern vorgesehenen elastischen Abstandshaltern an Fahrzeugleuchten.

Mit zunehmender Fertigungspräzision in der Automobiltechnik steigen die Anforderungen an die Passgenauigkeit von Fahrzeugteilen. Dabei gilt das Hauptaugenmerk dem vom Endkunden unmittelbar erkennbaren äußeren Erscheinungsbild von Kraftfahrzeugen, oft widergespiegelt durch das so genannte Spaltmaß, welches für Maßhaltigkeit, Abstand sowie Lage, beispielsweise hinsichtlich einer Verdrehlage, zweier oder mehrerer erkennbar unterschiedlicher, aneinander angrenzender Fahrzeugteile steht. Dabei ist ein möglichst gleichmäßiges und/oder kleines Spaltmaß einzuhalten, um die Qualitätsanforderungen einerseits hinsichtlich des Erscheinungsbilds und andererseits hinsichtlich einer möglichst strömungsgünstigen und "aus einem Guss" erscheinenden Fahrzeugoberfläche bzw. -kontur zu erfüllen.

Besonders augenfällig ist dies bei Fahrzeugleuchten im Allgemeinen und Fahrzeugheckleuchten im Speziellen, welche sich je nach Fahrzeugmodell teils nahtlos, teils mit möglichst präzise und gleichmäßig einzuhaltendem Spaltmaß bündig in die Oberfläche einer Karosserie beziehungsweise eines oder mehrerer Karosserieteile einfügen müssen.

Eine Fahrzeugleuchte umfasst im Wesentlichen einen von einem Leuchtengehäuse und einer Lichtscheibe ganz oder teilweise umschlossenen Leuchteninnenraum und mindestens ein darin vollständig oder teilweise beherbergtes, mindestens eine Lichtquelle umfassendes Leuchtmittel für wenigstens eine Lichtfunktion der Fahrzeugleuchte.

Die Befestigung einer Fahrzeugleuchte am Fahrzeug ist üblicherweise zwischen dem Leuchtengehäuse und mindestens einer eine im Folgenden unabhängig von ihrer Ausgestaltung als Einbauöffnung bezeichneten, beispielsweise eine Aufnahmeausnehmung in Form einer Vertiefung oder einer Aufnahmeöffnung in Form eines Ausschnitts oder Lochs bildenden Aussparung für die Fahrzeugleuchte beispielsweise in der Karosserie oder in einem oder mehreren Karosserieteilen begrenzenden Karosseriewandung vorgesehen.

Die Befestigung erfolgt beispielsweise mittels einer oder mehrerer Befestigungsvorrichtungen mit jeweils mindestens einem leuchtenseitig vorgesehenen ersten Befestigungselement sowie mindestens einem karosserie- bzw. fahrzeugseitig in der Einbauöffnung vorgesehenen, mit dem mindestens einen ersten Befestigungselement korrespondierenden zweiten Befestigungselement.

Beispielsweise ist durch DE 103 48 228 A1 bekannt, Fahrzeugheckleuchten mit Gewindebolzen und Muttern in der Einbauöffnung der Karosserie des Fahrzeuges zu befestigen. Dabei sind leuchtenseitig und fahrzeugseitig entsprechend mit den Gewindebolzen und Muttern korrespondierende Vorkehrungen getroffen, wie beispielsweise Öffnungen, Hintergreifungen, etc., welche zusammen mit den Gewindebolzen und Muttern erste und zweite Befestigungselemente bilden.

Um zwischen dem Rand der Fahrzeugleuchte und dem Rand der Einbauöffnung über den Umfang einen innerhalb von Toleranzvorgaben konstant breiten Spalt zu bilden, gestaltet sich die Montage der Fahrzeugleuchte schwierig. Ebenso verhält es sich bei der Montage von beispielsweise innerhalb von Toleranzvorgaben zumindest teils spaltfrei und/oder nahtlos, teils mit möglichst präzise und gleichmäßig einzuhaltendem Spaltmaß bündig in die Karosserie bzw. die Karosserieteile einzufügenden Fahrzeugleuchten.

Dabei wird die Einhaltung der Toleranzvorgaben beeinflusst durch innerhalb einer Gesamttoleranz einer Fahrzeugleuchte zulässige Oberflächenabweichungen zum Linienriß bzw. zur Hüllfläche der Fahrzeugleuchte und zulässige Umrissabweichungen zum Linienriss bzw. zur Hüllfläche der Fahrzeugleuchte. Die Gesamttoleranz einer Fahrzeugleuchte ergibt sich dabei aus den Toleranzen der Einzelbauteile, wie etwa der verwendeten Spritzgussbauteile, sowie aus den Toleranzen der Fertigungsprozesse, wie beispielsweise für die Verbindung zweier oder mehrerer Bauteile einer Fahrzeugleuchte verwendete Schweißprozesse.

Eine gesamte Toleranzkette von der Herstellung bis zum Einbau einer Fahrzeugleuchte in eine Einbauöffnung umfasst damit zusätzlich zu den zur Gesamttoleranz angegebenen Einflussgrößen die zulässige Toleranz in Bezug auf Position und Lage beim Einbau der Fahrzeugleuchte in die Einbauöffnung.

Zur Vereinfachung des Einbaus von Fahrzeugleuchten in Einbauöffnungen hat sich als vorteilhaft erwiesen, an der Fahrzeugleuchte, insbesondere im rückwärtigen und/oder seitlichen, bei fertig in einer zu deren Festlegung an einer Fahrzeugkarosserie vorgesehenen Einbauöffnung festgelegter Fahrzeugleuchte nicht einsehbaren Bereich an deren Leuchtengehäuse und/oder am Rand deren Lichtscheibe, als Spaltbegrenzer vorgesehene Abstandshalter anzuordnen. Diese erlauben im Rahmen des der Einbauöffnung zuzuordnenden Teils der Toleranzkette und des der Fahrzeugleuchte zuzuordnenden Teils der Toleranzkette ein zumindest ansatzweise lagegenaues Einbringen, beispielsweise Einlegen der Fahrzeugleuchte entsprechend ihrer Anordnung in die Einbauöffnung wenigstens eines Karosserieteils oder einer Karosserie eines Fahrzeugs, indem die an der Fahrzeugleuchte angeordneten Abstandshalter in Kontakt mit der Karosseriewandung der Einbauöffnung treten.

Bislang werden solche Abstandshalter nach der Fertigstellung der Fahrzeugleuchte an entsprechenden neuralgischen Stellen des Leuchtengehäuses und/oder des Rands der Lichtscheibe vermittels beispielsweise doppelseitgem Klebeband oder an den Abstandshaltern herstellerseitig angebrachten Klebeschichten, wie etwa einer Klebefolie mit abzuziehender Schutzfolie oder dergleichen angeordnet.

Nachteilig hieran ist der hohe Fertigungsaufwand, unabhängig davon, ob die Anordnung manuell oder automatisiert vonstatten geht, weil die oftmals als Applikation bezeichnete Anordnung von Abstandshaltern an einer beispielsweise als Heckleuchte ausgeführten Fahrzeugleuchte, insbesondere im rückwärtigen und/oder seitlichen, bei fertig in einer zu deren Festlegung an einer Fahrzeugkarosserie vorgesehenen Einbauöffnung festgelegter Fahrzeugleuchte nicht einsehbaren Bereich eines Leuchtengehäuses zusätzlicher Arbeitsschritte bedarf, einhergehend mit dem Aufwand zur exakten Positionierung.

So werden als Spaltbegrenzer vorgesehene Abstandshalter seither als zusätzliches Teil eingekauft und durch einen Klebeprozess auf der fertigen Fahrzeugleuchte befestigt. Hierbei entsteht ein zusätzlicher Aufwand sowohl durch die Beschaffung der Kleberapplikation als auch zusätzlicher Aufwand durch Montage auf der Fahrzeugleuchte einschließlich evtuell notwendiger Vorbereitungsprozesse und Andrückprozesse.

Darüber hinaus sind derartig angeordnete, als Spaltbegrenzer vorgesehene Abstandshalter nicht verliersicher befestigt und können während des nach der Fertigstellung der Fahrzeugleuchte stattfindenden Umgangs, wie etwa während des Transports und/oder vor und/oder während der Lagerung und/oder während der Handhabung in Vorbereitung und Durchführung des Einbaus der Fahrzeugleuchte in die Einbauöffnung beim Kunden abfallen. Außerdem kommt es beim Einbau der Fahrzeugleuchte in die Einbauöffnung sporadisch zum Verschieben oder gar zum Entfernen der Abstandshalter.

Ferner tritt insbesondere in heißen Umgebungen das allgemein bekannte Problem eines Verschiebens der Abstandshalter unter Verschmieren der Klebeschichten im laufenden Fahrbetrieb unter Aufhebung der in der Fertigung vorgesehenen Positionierung auf.

Zusätzlich wird die auch als Toleranzsystem bezeichnete Toleranzkette aus einander addierenden Einzeltoleranzen durch die Abstandshalter negativ beeinflusst.

Durch DE 10 2006 026 538 B4 ist eine Beschichtung eines ersten Strukturelements, welches mit einem zweiten Strukturelement verklebt werden soll, mit dem Werkstoff des zweiten Strukturelements zum Erhalt bekannter Werkstoffeigenschaften bei der Verklebung bekannt.

Durch DE 10 2012 020 795 A1 ist eine flexibel mit einem Leuchtengehäuse verbundene Strebe bekannt.

Durch CN 203211176 U sind elastische Abstandshalter in Fahrzeugleuchten bekannt.

Durch GB 2 424 472 A sind ein Verfahren zur Herstellung einer Leuchtenbauteilgruppe mit mindestens einem an diesem angeordneten, als Spaltbegrenzer vorgesehenen Abstandshalter und eine Leuchtenbauteilgruppe mit mindestens einem an dieser angeordneten, als Spaltbegrenzer vorgesehenen Abstandshalter bekannt. Das Verfahren sieht vor, zunächst die Leuchtenbauteile der Leuchtenbauteilgruppe herzustellen, dann die Leuchtenbauteile relativ zueinander positioniert in eine Spritzgussform einzulegen, anschließend eine Verbindung zwischen den beiden Leuchtenbauteilen durch Einspritzen einer als Abstandshalter der Leuchtenbauteilgruppe zu einer Fahrzeugstruktur dienenden elastischen Partie in die Spritzgussform herzustellen und schließlich die fertige Leuchtenbauteilgruppe aus der Spritzgussform zu entnehmen.

Durch DE 10 2015 013 622 A1 ist eine Fahrzeugleuchte bekannt, die in einem Randbereich, welcher bei Anordnung der Fahrzeugleuchte an einem Fahrzeug einen Teilbereich einer Seitenwand des Fahrzeugs verdeckt. Anstelle eines aus hartem Kunststoff gebildeten, an einem Leuchtenbauteil der Fahrzeugleuchte angeordneten Spacers, welcher in dem Randbereich in direkten Kontakt mit der Seitenwand gerät, ist dieser bei der Fahrzeugleuchte aus einem Schaummaterial in Form einer weichen Schaumlippe beziehungsweise in Form eines weichen Dichtschaums gebildet.

Durch DE 10 2010 060 774 A1 ist bekannt, ein Leuchtenbauteil an einer Fahrzeugleuchte vorzusehen, welches einen Vorsprung aufweist, mit dem sich das Leuchtenbauteil gegenüber einem Fahrzeugbauteil abstützt. Das Leuchtenbauteil ist durch einen Kunststoffrahmen gebildet, der eine Lichtscheibe der Fahrzeugleuchte zumindest bereichsweise umgibt. Der Vorsprung ist durch eine Hartkomponente des Kunststoffrahmens gebildet, die wiederum mit einer Weichkomponente überzogen sein kann. Die Hartkomponente ist dabei in einem zweiten Spritzgussschritt mit der Weichkomponente umspritzt.

Durch US 5,993,036 ist bekannt, auf eine sich gegenüber einem Fahrzeugbauteil abstützende Kante eines Leuchtenbauteils eine elastische Dichtung anzuspritzen.

Durch US 6,270,242 B1 ist bekannt, eine Fahrzeugleuchte mit einer zur Abstützung gegenüber einem Fahrzeugbauteil vorgesehenen Kante in eine Spritzgussform einzulegen und an die eingelegte Kante eine Dichtung aus einem elastischen Werkstoff anzuspritzen.

Eine Aufgabe der Erfindung ist es, ein Verfahren zur Herstellung eines Leuchtenbauteils mit mindestens einem an diesem angeordneten, als Spaltbegrenzer vorgesehenen Abstandshalter anzugeben, welches eine verbesserte stoffschlüssige Verbindung beim Anspritzen des Leuchtenbauteils an eine elastische Partie des Abstandshalters schafft, sowie ein Leuchtenbauteil mit mindestens einem an diesem verbessert stoffschlüssig angeordneten, als Spaltbegrenzer vorgesehenen Abstandshalter, und eine mit einem entsprechenden Leuchtenbauteil ausgestattete Fahrzeugleuchte zu entwickeln.

Die Aufgabe wird durch die Merkmale der unabhängigen Ansprüche gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zur Herstellung eines Leuchtenbauteils, insbesondere eines Leuchtengehäuses oder einer Lichtscheibe, mit mindestens einem an diesem angeordneten, als Spaltbegrenzer vorgesehenen Abstandshalter.

Das Verfahren sieht vor, zunächst mindestens eine elastische Partie als Abstandshalter durch Spritzgießen einer ersten Komponente herzustellen, und anschließend nach dem zumindest teilweise Verfestigen der ersten Komponente ein Leuchtenbauteil an die mindestens eine elastische Partie als Abstandshalter durch Spritzgießen einer zweiten Komponente an das mindestens eine durch Spritzgießen der ersten Komponente bereits hergestellte Teil anzuspritzen.

Anschließend sieht das Verfahren bevorzugt vor, ein zumindest teilweises Verfestigen auch der zweiten Komponente abzuwarten und dann das fertige und mit mindestens einer elastischen Partie als Abstandshalter ausgestattete Leuchtenbauteil einer zumindest für das Anspritzen der zweiten Komponente an das mindestens eine durch Spritzgießen der ersten Komponente bereits hergestellte Teil verwendeten Spritzgussform zu entnehmen.

Bevorzugt sieht das Verfahren vor, durch Mehrkomponenten-Spritzgießen zunächst mindestens eine elastische Partie als Abstandshalter durch Spritzgießen einer ersten Komponente herzustellen, und anschließend nach dem zumindest teilweise Verfestigen der ersten Komponente ein Leuchtenbauteil an die mindestens eine als Abstandshalter vorgesehene elastische Partie durch Spritzgießen einer zweiten Komponente an das mindestens eine durch Spritzgießen der ersten Komponente bereits hergestellte Teil anzuspritzen.

Das Mehrkomponenten-Spritzgießen dient der Herstellung von Spritzgussteilen, die aus zwei oder mehreren verschiedenen Kunststoffen bestehen. Hierdurch können unterschiedliche Werkstoffe und damit unterschiedliche Eigenschaften gezielt kombiniert werden.

Beispielsweise kann das Verfahren vorsehen, zunächst mindestens eine elastische Partie als Abstandshalter durch Spritzgießen einer ersten, in diesem Fall elastisch verfestigenden Komponente herzustellen. Anschließend wird die mindestens eine als Abstandshalter vorgesehene elastische Partie vom Leuchtenbauteil durch Spritzgießen einer zweiten Komponente an die mindestens eine elastische Partie als Abstandshalter teilweise umspritzt. Hierbei handelt es sich um ein Mehrrohstoff-Spritzgießen, bei dem unterschiedliche Werkstoffe zu einem das Leuchtenbauteil und den mindestens einen als Spaltbegrenzer vorgesehenen Abstandshalter umfassenden Teil verarbeitet werden, um eine stoffschlüssige, unlösbare und dadurch verliersichere Hart-Weich-Verbindung zwischen dem mindestens einen durch eine elastische Partie gebildeten Abstandshalter und dem aus einer bei Einsatztemperatur fest verfestigenden Komponente hergestellten Leuchtenbauteil zu erzielen.

Hierbei entstehen Teile mit streng getrennten Komponentenbereichen, indem zunächst ein unfertiger Vorspritzling, nämlich die mindestens eine elastische Partie oder das Leuchtenbauteil erzeugt wird, der dann in einem weiteren Schritt mit einer anderen Komponente, nämlich - je nachdem, was noch fehlt - der Komponente für das verbleibende Leuchtenbauteil oder die mindestens eine elastische Partie teilweise um- und/oder überspritzt wird.

Das Verfahren kann hierzu beispielsweise vorsehen, die mindestens eine durch Spritzgießen einer ersten, in diesem Fall elastisch verfestigenden Komponente zunächst hergestellte, als Abstandshalter vorgesehene elastische Partie nach dem Spritzgießen der ersten Komponente in eine neue, auch als Werkzeugkavität oder kurz Werkzeug bezeichnete Spritzgussform umzusetzen, welche einen oder mehrere eigens zur Aufnahme der mindestens einen elastischen Partie vorgesehene Plätze aufweist. Das Umsetzen kann manuell oder automatisiert vorgenommen werden. Anschließend wird das Leuchtenbauteil an die mindestens eine elastische Partie durch Spritzgießen der zweiten Komponente in der neuen Spritzgussform angespritzt.

Besonders bevorzugt kann das Verfahren vorsehen, durch Mehrkomponenten-Spritzgießen in einer anhand eines oder mehrerer Schieber entsprechend unterteilbaren, die äußere Geometrie des Leuchtenbauteils und des mindestens einen Abstandshalters vorgebenden Spritzgussform zunächst mindestens eine elastische Partie als Abstandshalter durch Spritzgießen einer ersten Komponente herzustellen, und anschließend nach dem zumindest teilweise Verfestigen der ersten Komponente den mindestens einen die Spritzgussform unterteilenden Schieber zu öffnen und ein Leuchtenbauteil an die mindestens eine als Abstandshalter vorgesehene elastische Partie durch Spritzgießen einer zweiten Komponente an das mindestens eine durch Spritzgießen der ersten Komponente bereits hergestellte Teil anzuspritzen.

Hierzu kann eine Spritgießmaschine mit zwei oder auch mehreren Spritzeinheiten aber nur einer Schließeinheit vorgesehen werden. Die Leuchtenbauteile mit an diesen angeordneten, als Spaltbegrenzer vorgesehenen Abstandshaltern können damit kostengünstig mit nur einem Werkzeug in einem Arbeitsgang hergestellt werden. Die Komponenten können durch eine einzige Spezialdüse eingespritzt oder an verschiedenen Stellen ins Werkzeug eingebracht werden.

Denkbar ist in diesem Zusammenhang, dass eine als Dreh- und/oder Verschiebetechnik bezeichnete Abfolge beim Mehrkomponenten-Spritzgießen angewandt wird, bei der das Werkzeug oder beispielsweise nur ein Teil des Werkzeugs, wie etwa die Hälfte des Werkzeugs, nach einem das Spritzgießen der ersten Komponente besorgenden ersten Spritzvorgang in eine neue Lage gedreht oder verschoben wird und der so erzeugte Vorspritzling in der neuen Lage in einem das Spritzgießen der zweiten Komponente besorgenden zweiten Spritzvorgang mit einer weiteren Düse überspritzt wird.

Denkbar ist in diesem Zusammenhang, dass alternativ eine als Kernrückzugstechnik bezeichnete Abfolge beim Mehrkomponenten-Spritzgießen angewandt wird, bei der nach einem das Spritzgießen der ersten Komponente besorgenden ersten Spritzvorgang ein Kern im Werkzeug zurückgezogen wird, um Platz für die mit einem das Spritzgießen der zweiten Komponente besorgenden zweiten Spritzvorgang neu hinzukommende Komponente zu schaffen.

Ein zweiter Gegenstand der Erfindung betrifft ein Leuchtenbauteil mit mindestens einem an diesem angeordneten, als Spaltbegrenzer vorgesehenen Abstandshalter.

Das Leuchtenbauteil zeichnet sich dadurch aus, dass der oder die Abstandshalter jeweils aus einer oder mehreren elastischen Partien bestehen, die durch ein gemäß einem voranstehend beschriebenen Verfahren ausgeführtes Mehrkomponenten-Spritzgießen unmittelbar stoffschlüssig und verliersicher am Leuchtenbauteil angeordnet sind.

Wichtig ist hervorzuheben, dass es sich bei dem Leuchtenbauteil bevorzugt um ein Leuchtengehäuse oder um eine Lichtscheibe handelt.

Grundsätzlich sind auch andere, mit Abstandshaltern ausgestattete Leuchtenbauteile denkbar, wie etwa Reflektoren.

Ein dritter Gegenstand der Erfindung betrifft eine Fahrzeugleuchte mit einem von einem Leuchtengehäuse und einer Lichtscheibe zumindest teilweise umschlossenen Leuchteninnenraum, welcher wenigstens ein zur Erfüllung mindestens einer Lichtfunktion der Fahrzeugleuchte vorgesehenes Leuchtmittel und/oder wenigstens ein einer vorgegebenen Lichtverteilung mindestens einer Lichtfunktion der Fahrzeugleuchte beitragendes Leuchtmittel zumindest teilweise beherbergt.

Zumindest ein Leuchtenbauteil, bevorzugt aus der Gruppe Leuchtengehäuse, Lichtscheibe, ist mit mindestens einem an diesem angeordneten, als Spaltbegrenzer gegenüber einer eine kurz als Einbauöffnung bezeichnete, beispielsweise eine Aufnahmeausnehmung in Form einer Vertiefung oder einer Aufnahmeöffnung in Form eines Ausschnitts oder Lochs bildenden Aussparung für die Fahrzeugleuchte beispielsweise in der Karosserie oder in einem oder mehreren Karosserieteilen eines Fahrzeugs begrenzenden Karosseriewandung vorgesehenen Abstandshalter ausgestattet.

Jeder Abstandshalter besteht aus einer oder mehreren elastischen Partien, die durch ein gemäß einem voranstehend beschriebenen Verfahren ausgeführtes Mehrkomponenten-Spritzgießen unmittelbar stoffschlüssig und verliersicher am Leuchtenbauteil angeordnet sind.

Demnach zeichnet sich die Fahrzeugleuchte durch ein zuvor beschriebenes Leuchtenbauteil aus.

Es ist ersichtlich, dass die Erfindung eine Integration eines als Spaltbegrenzer vorgesehenen Abstandshalters in den Herstellungsprozess einer Heckleuchtenproduktion vorsieht, wobei der oder die Abstandshalter durch Mehrkomponenten-Spritzgießen in einem zur Herstellung eines mit Abstandhaltern zu versehenden Leuchtenbauteils vorgesehenen Spritzguss-Vorgang stoffschlüssig und unverlierbar am Leuchtenbauteil angeordnet werden und hierzu aus einer elastisch verfestigenden Komponente selbst durch Spritzgießen während des Mehrkomponenten-Spritzgießens hergestellt werden.

Zusammengefasst sieht die Erfindung zur Behebung der Nachteile des Standes der Technik vor, Abstandshalter beispielsweise im Mehrkomponenten-Spritzguss herzustellen, wobei im Anschluss an eine als Abstandshalter dienende elastische Partie das Leuchtenbauteil, an welchem der Abstandshalter zur Anordnung vorgesehen ist, aus einem anderen Werkstoff angespritzt wird.

Derart vorgefertigte Abstandshalter können direkt in dem jeweiligen Spritzgusswerkzeug in einem ersten Spritzgussvorgang hergestellt oder nach deren Herstellung in das jeweilige Spritzgusswerkzeug des jeweiligen herzustellenden und bei fertiger Leuchte mit einem oder mehreren Abstandshaltern zu versehenden Leuchtenbauteils eingelegt und anschließend mit dem Werkstoff des jeweiligen Leuchtenbauteils verspritzt werden.

Über die Lösung der gestellten Aufgabe unter Beseitigung der Nachteile des Standes der Technik hinausgehende Vorteile der Erfindung sind neben einer Einsparung mehrerer beim Stand der Technik zusätzlich erforderlicher notwendiger Applikationsprozesse wie dem Aufbringen von Klebefolie und/oder Kleber auf als Spaltbegrenzer vorgesehene Abstandshalter als auch der montageseitige Entfall der Applikation auf der Fahrzeugleuchte mit zusätzlich erforderlichen Vorbereitung- und Andrückprozesse, einhergehend mit einer erheblichen Qualitätssteigerung unter Verringerung des Ausschusses vollständiger Fahrzeugleuchten durch Vermeidung von Weiterbehandlungsschritten im Anschluss an die Fertigstellung der Fahrzeugleuchte.

So besteht bei der Erfindung nicht mehr die Gefahr, dass es wie beim Stand der Technik beim erst im Nachgang zur Herstellung der Leuchte stattfindenden Anbringen der Abstandshalter zu teils irreparablen Fehlern und Verunreinigungen kommen kann.

Darüber hinaus ist der umspritzte und als Spaltbegrenzer dienende Abstandshalter verliersicher und auch einbausicher auf der Leuchte fixiert. Durch das umspritzen entsteht eine feste Verbindung mit dem Grundmaterial die nur durch Zerstörung des als Spaltbegrenzer dienenden Abstandshalter wieder trennbar ist.

Beim Einbau der Leuchte ins Fahrzeug kann der als Spaltbegrenzer dienende Abstandshalter nicht mehr von der Leuchte gedrückt werden und/oder von seiner Sollposition verschoben und somit in seiner Funktion beeinträchtigt werden.

Zusätzlich lässt sich hierbei die Toleranzkette des Leuchteneinbaus im Fahrzeug minimieren, da die als Spaltbegrenzer dienenden Abstandshalter oft als RPS Nullanlage dienen.

Zusätzliche Vorteile gegenüber dem Stand der Technik sind:
- Entfall von zusätzlich notwendigen Vorbereitungsprozesse für die Klebung
- Entfall von 2 Klebeprozesse
- Entfall der Applikation auf die Heckleuchte im Montageprozess
- Verringerung der Toleranzkette der Fahrzeugleuchten bezogen auf den Fahrzeugeinbau.

Wichtig ist hervorzuheben, dass sowohl das Leuchtenbauteil als auch alternativ oder zusätzlich die Fahrzeugleuchte einzelne oder eine Kombination der zuvor und/oder nachfolgend in Verbindung mit dem Verfahren beschriebene Merkmale aufweisen kann, ebenso wie sowohl das Verfahren als auch alternativ oder zusätzlich die Fahrzeugleuchte einzelne oder eine Kombination mehrerer zuvor und/oder nachfolgend in Verbindung mit dem Leuchtenbauteil beschriebene Merkmale aufweisen und/oder verwirklichen kann.

Genauso kann sowohl das Verfahren als auch alternativ oder zusätzlich das Leuchtenbauteil einzelne oder eine Kombination mehrerer zuvor und/oder nachfolgend in Verbindung mit der Fahrzeugleuchte beschriebene Merkmale aufweisen und/oder verwirklichen.

Das Verfahren und/oder das Leuchtenbauteil und/oder die Fahrzeugleuchte können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind in der nachfolgenden Beschreibung die Figuren betreffend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

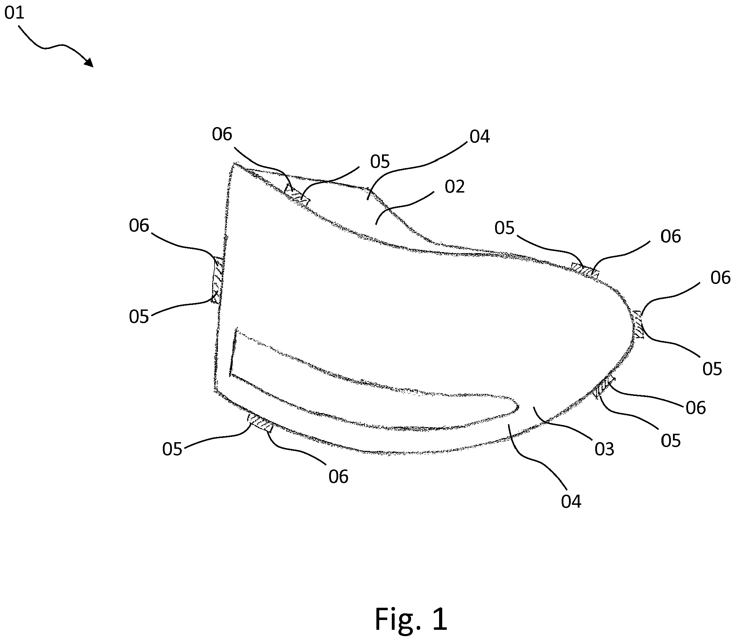

- Fig. 1: eine Fahrzeugleuchte mit einem Leuchtengehäuse und einer Lichtscheibe, welches Leuchtengehäuse und/oder welche Lichtscheibe mit mindestens einem durch wenigstens eine vermittels Spritzgießen einstückig verbundene, elastische Partie gebildeten, als Spaltbegrenzer gegenüber einer eine Einbauöffnung begrenzenden Karosseriewandung vorgesehenen Abstandshalter ausgestattet ist, in perspektivischer Ansicht.

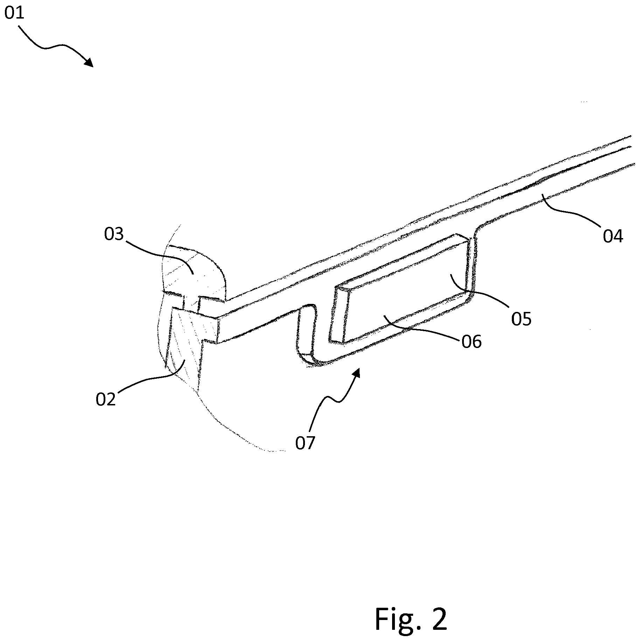

- Fig. 2: eine Detailansicht eines mit einer Lichtscheibe verbundenen Leuchtengehäuses mit einem durch eine an das Leuchtengehäuse angespritzte elastische Partie gebildeten, als Spaltbegrenzer gegenüber einer eine Einbauöffnung begrenzenden Karosseriewandung vorgesehenen Abstandshalter in perspektivischer Ansicht.

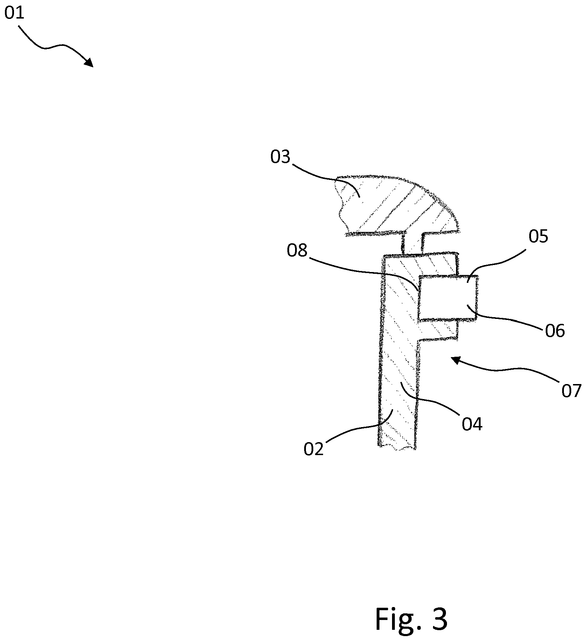

- Fig. 3: ein erstes Ausführungsbeispiel eines durch eine an ein mit einer Lichtscheibe beispielsweise vermittels Laserdurchstrahlschweissen verbundenes Leuchtengehäuse einer Fahrzeugleuchte angespritzte elastische Partie gebildeten, als Spaltbegrenzer gegenüber einer eine Einbauöffnung begrenzenden Karosseriewandung vorgesehenen Abstandshalters in einem Querschnitt.

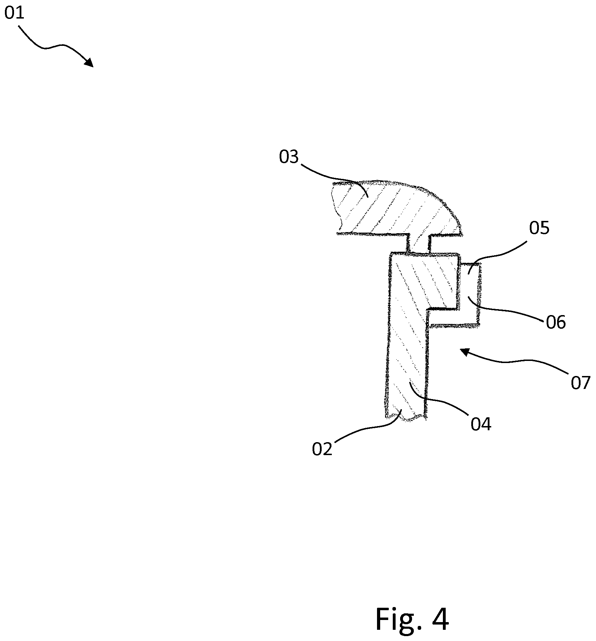

- Fig. 4: ein zweites Ausführungsbeispiel eines durch eine an ein mit einer Lichtscheibe beispielsweise vermittels Laserdurchstrahlschweissen verbundenes Leuchtengehäuse einer Fahrzeugleuchte angespritzte elastische Partie gebildeten, als Spaltbegrenzer gegenüber einer eine Einbauöffnung begrenzenden Karosseriewandung vorgesehenen Abstandshalters in einem Querschnitt.

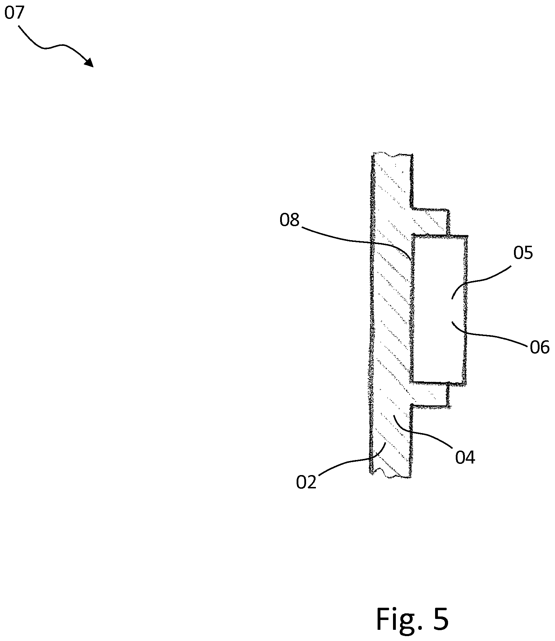

- Fig. 5: ein Ausführungsbeispiel eines Leuchtenbauteils mit mindestens einem an diesem durch Spritzgießen stoffschlüssig und unverlierbar angeordneten, als Spaltbegrenzer vorgesehenen Abstandshalter in einem Querschnitt.

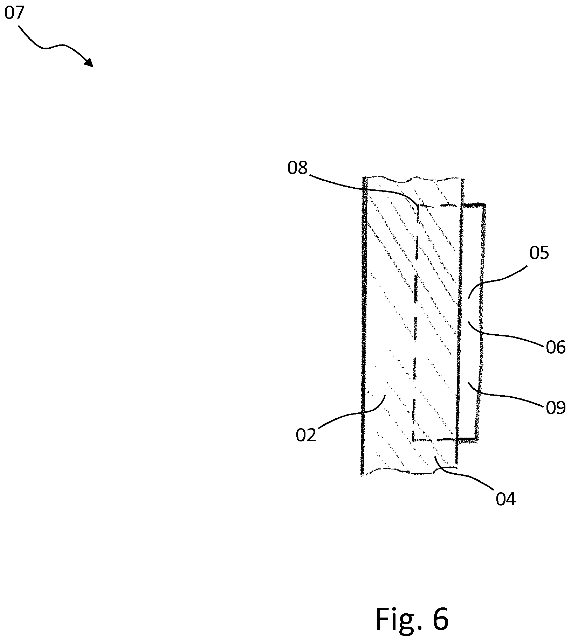

- Fig. 6: ein weiteres Ausführungsbeispiel eines Leuchtenbauteils mit mindestens einem an diesem durch Spritzgießen stoffschlüssig und unverlierbar angeordneten, als Spaltbegrenzer vorgesehenen Abstandshalter in einem Querschnitt.

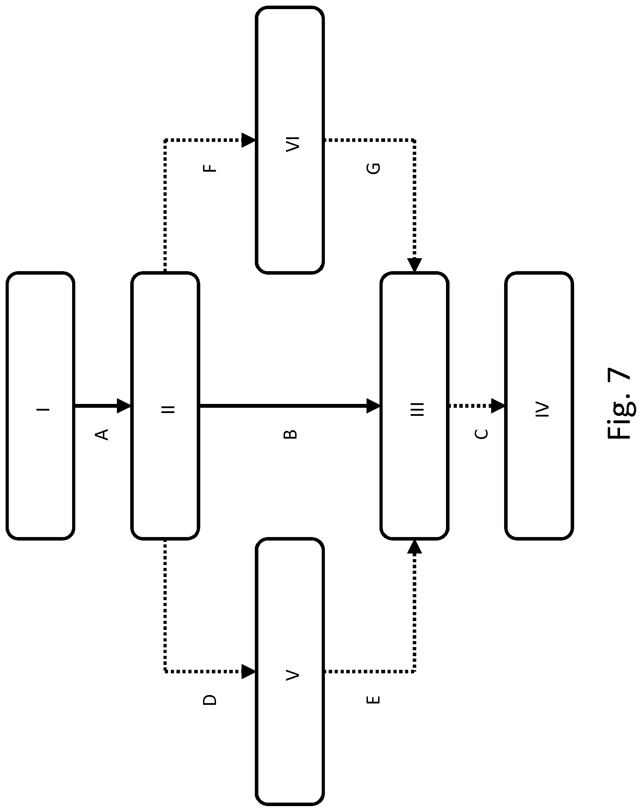

- Fig. 7: ein Ablaufdiagramm mit Abfolgen von Verfahrensschritten verschiedener Ausgestaltungen eines Verfahrens zur Herstellung eines Leuchtenbauteils, insbesondere eines Leuchtengehäuses oder einer Lichtscheibe, mit mindestens einem an diesem angeordneten, als Spaltbegrenzer vorgesehenen Abstandshalter.

Eine in Fig. 1, Fig. 2, Fig. 3, Fig. 4, Fig. 5, Fig. 6 ganz oder in Teilen dargestellte Fahrzeugleuchte 01 umfasst einen von einem Leuchtengehäuse 02 und einer Lichtscheibe 03 zumindest teilweise umschlossenen Leuchteninnenraum.

Der Leuchteninnenraum beherbergt zumindest teilweise wenigstens ein zur Erfüllung mindestens einer Lichtfunktion der Fahrzeugleuchte 01 vorgesehenes Leuchtmittel und/oder wenigstens ein einer vorgegebenen Lichtverteilung mindestens einer Lichtfunktion der Fahrzeugleuchte 01 beitragendes Leuchtmittel.

Zumindest ein Leuchtenbauteil 04 der Fahrzeugleuchte 01, wie beispielsweise deren Leuchtengehäuse 02 und/oder deren Lichtscheibe 03, ist mit mindestens einem an diesem angeordneten, als Spaltbegrenzer gegenüber einer eine kurz als Einbauöffnung bezeichnete, beispielsweise eine Aufnahmeausnehmung in Form einer Vertiefung oder einer Aufnahmeöffnung in Form eines Ausschnitts oder Lochs bildenden Aussparung für die Fahrzeugleuchte 01 beispielsweise in einer Karosserie oder in einem oder mehreren Karosserieteilen eines Fahrzeugs begrenzenden Karosseriewandung vorgesehenen Abstandshalter 05 ausgestattet.

Bei dem Leuchtenbauteil 04 handelt es sich bevorzugt um ein Leuchtengehäuse 02 und/oder eine Lichtscheibe 03. Grundsätzlich kann es sich auch um ein anderes Leuchtenbauteil, wie etwa einen beispielsweise im Leuchteninnenraum zumindest teilweise beherbergten Reflektor handeln.

Ein von einem Leuchtengehäuse 02 und/oder einer Lichtscheibe 03 verschiedenes, mit einem Abstandshalter 05 versehenes Leuchtenbauteil 04 weist vorzugsweise eine Partie auf, welche eine dem Leuchteninnenraum abgewandte und bei in eine Einbauöffnung eingebrachter Fahrzeugleuchte 01 einer die Einbauöffnung begrenzenden Karosseriewandung zugewandte, mit dem mindestens einen Abstandshalter 05 versehene Oberfläche umfasst.

Jeder Abstandshalter 05 besteht aus einer oder mehreren elastischen Partien 06 oder umfasst wenigstens eine elastische Partie 06.

Die als Abstandshalter 05 vorgesehene elastische Partie 06 ist durch Spritzgießen, beispielsweise durch Mehrkomponenten-Spritzgießen der mindestens einen elastischen Partie 06 und des Leuchtenbauteils 04 mit unterschiedlichen Komponenten unmittelbar stoffschlüssig und verliersicher an dem Leuchtenbauteil 04 angeordnet.

Demnach zeichnet sich die beschriebene Fahrzeugleuchte 01 durch mindestens ein durch Spritzgießen einer Komponente hergestelltes Leuchtenbauteil 04 mit mindestens einer an diesem als zumindest ein Abstandshalter 05 durch Spritzgießen einer von der Komponente des Leuchtenbauteils 04 verschiedenen weiteren Komponente unmittelbar stoffschlüssig und verliersicher angeordneten elastischen Partie 06 aus.

Damit umfasst die Fahrzeugleuchte 01 mindestens ein Leuchtenbauteil 04 mit mindestens einem an diesem angeordneten, als Spaltbegrenzer vorgesehenen Abstandshalter 05, wobei der oder die Abstandshalter 05 jeweils eine oder mehrere elastische Partien 06 umfassen, die durch Spritzgießen unmittelbar stoffschlüssig und verliersicher am Leuchtenbauteil 04 angeordnet sind.

Bei dem Leuchtenbauteil 04 handelt es sich bevorzugt um ein Leuchtengehäuse 02 oder um eine Lichtscheibe 03.

Grundsätzlich sind auch andere, mit durch eine oder mehrere elastische Partien 06 gebildeten oder solche umfassenden oder von solchen umfassten Abstandshaltern 05 ausgestattete Leuchtenbauteile 04 denkbar, wie etwa Reflektoren.

Der oder die Abstandhalter 05 sind bei als Leuchtengehäuse 02 ausgeführten Leuchtenbauteilen 04 bevorzugt im rückwärtigen und/oder seitlichen, bei fertig in einer zu deren Festlegung an einer Fahrzeugkarosserie vorgesehenen Einbauöffnung eingebrachter Fahrzeugleuchte 01 nicht einsehbaren Bereich des Leuchtengehäuses 02 angeordnet.

Bei als Lichtscheiben 03 ausgeführten Leuchtenbauteilen 04 sind der oder die Abstandhalter 05 an einem umlaufenden Rand und/oder in einem der Vorderseite der Lichtscheibe 03 abgewandten, beispielsweise bei fertig montierter Fahrzeugleuchte 01 über das Leuchtengehäuse 02 seitlich überstehenden Randbereich angeordnet.

Die jeweils eine oder mehreren elastischen Partien 06, welche einen Abstandshalter 05 bilden, einen solchen umfassen oder von einem solchen umfasst werden, sind vorzugsweise durch Mehrkomponenten-Spritzgießen unmittelbar stoffschlüssig und verliersicher am Leuchtenbauteil 04 angeordnet.

Das Leuchtenbauteil 04 ist gemäß einem nachfolgend beschriebenen und in einem in Fig. 7 dargestellten Ablaufdiagramm verschiedener Abfolgen seiner Verfahrensschritte ausgeführten Verfahren zur Herstellung eines ein Leuchtenbauteil 04, insbesondere ein Leuchtengehäuse 02 oder einer Lichtscheibe 03, mit mindestens einem an diesem angeordneten, als Spaltbegrenzer vorgesehenen Abstandshalter 05 umfassenden Spritzgussteils 07 hergestellt, welches durch insbesondere mehrstufiges Spritzgießen eine stoffschlüssige und verliersichere Verbindung zwischen dem Leuchtenbauteil 04 und mindestens einer an diesem als zumindest ein Abstandshalter 05 angeordneten elastischen Partie 06 schafft.

Das Verfahren sieht zunächst in einem ersten Verfahrensschritt I vor, zunächst das Leuchtenbauteil 01 oder mindestens eine elastische Partie 06 als Abstandshalter 05 durch Spritzgießen einer ersten Komponente herzustellen.

Dabei wird erfindungsgemäß zunächst mindestens eine elastische Partie 06 als Abstandshalter 05 durch Spritzgießen der ersten Komponente hergestellt.

In einem wie durch einen Pfeil A in Fig. 7 angedeutet auf den ersten Verfahrensschritt I folgenden zweiten Verfahrensschritt II sieht das Verfahren vor, ein zumindest teilweises Verfestigen der ersten Komponente abzuwarten.

Die Einschränkung eines Abwartens eines zumindest teilweise Verfestigens schließt mit ein, dass wenn im ersten Verfahrensschritt zumindest eine elastische Partie 06 als Abstandshalter 05 durch Spritzgießen der ersten Komponente hergestellt wurde, diese selbst in einem beispielsweise am Ende eines Abkühlvorgangs auf eine Temperatur bei beispielsweise physikalischen Normalbedingungen oder etwa am Ende eines Abbindevorgangs, bei dem zwei oder mehr die Komponente bildende, miteinander vermengte Ausgangsstoffe im Sinne chemischer Reaktanden miteinander reagieren, vorliegenden endausgehärteten Zustand nicht vollständig hart werden, um die Elastizität der elastischen Partie 06 sicherzustellen.

Ebenso umfasst die Einschränkung den Umstand, dass nicht zwingend bis zu einer Vollaushärtung abgewartet werden muss, bevor ein nachfolgender, dritter Verfahrensschritt vorgenommen wird, beispielsweise wenn die Verfestigung der ersten Komponente so weit fortgeschritten ist, dass ein Fließen der ersten Komponente ausgeschlossen werden kann.

In einem wie durch einen Pfeil B in Fig. 7 angedeutet an den zweiten Verfahrensschritt II anschließenden dritten Verfahrensschritt III sieht das Verfahren vor, das Leuchtenbauteil 04 an die mindestens eine elastische Partie 06 als Abstandshalter 05 durch Spritzgießen einer zweiten Komponente an das mindestens eine im ersten Verfahrensschritt I durch Spritzgießen der ersten Komponente bereits hergestellte Teil anzuspritzen oder das mindestens eine im ersten Verfahrensschritt I durch Spritzgießen der ersten Komponente bereits hergestellte Teil durch Spritzgießen der zweiten Komponente teilweise zu umspritzen.

Erfindungsgemäß wird im ersten Verfahrensschritt I mindestens eine elastische Partie 06 als Abstandshalter 05 spritzgegossen, und so wird im dritten Verfahrensschritt III das Leuchtenbauteil 04 durch Spritzgießen der zweiten Komponente an die mindestens eine im ersten Verfahrensschritt I durch Spritzgießen der ersten Komponente hergestellte elastische Partie 06 als Abstandshalter 05 angespritzt oder die mindestens eine im ersten Verfahrensschritt I durch Spritzgießen der ersten Komponente hergestellte elastische Partie 06 als Abstandshalter 05 im dritten Verfahrensschritt III von dem Leuchtenbauteil 04 durch Spritzgießen der zweiten Komponente teilweise umspritzt.

Das Verfahren kann in einem wie durch einen gestrichelten Pfeil C in Fig. 7 dargestellt auf den dritten Verfahrensschritt III folgenden vierten und letzten Verfahrensschritt IV vorsehen, ein zumindest teilweises Verfestigen auch der zweiten Komponente abzuwarten und dann das fertige Spritzgussteil 07 bestehend aus dem mit mindestens einer elastischen Partie 06 als Abstandshalter 05 ausgestatteten Leuchtenbauteil 04 einer zumindest zum Anspritzen der zweiten Komponente an das mindestens eine durch Spritzgießen der ersten Komponente bereits hergestellte Teil verwendete Spritzgussform zu entnehmen.

Bevorzugt sieht das Verfahren vor, durch Mehrkomponenten-Spritzgießen im ersten Verfahrensschritt I zunächst mindestens eine elastische Partie 06 als Abstandshalter 05 durch Spritzgießen einer ersten Komponente herzustellen, und anschließend nach dem zumindest teilweise Verfestigen der ersten Komponente im zweiten Verfahrensschritt II im dritten Verfahrensschritt III das Leuchtenbauteil 04 an die mindestens eine als Abstandshalter 05 vorgesehene elastische Partie 06 durch Spritzgießen einer zweiten Komponente an das mindestens eine durch Spritzgießen der ersten Komponente im ersten Verfahrensschritt I bereits hergestellte Teil anzuspritzen oder das mindestens eine durch Spritzgießen der ersten Komponente im ersten Verfahrensschritt I bereits hergestellte Teil durch Spritzgießen der zweiten Komponente teilweise zu umspritzen.

Das Mehrkomponenten-Spritzgießen dient der Herstellung von Spritzgussteilen 07, die aus zwei oder mehreren verschiedenen Kunststoffen bestehen. Hierdurch können unterschiedliche Werkstoffe und damit unterschiedliche Eigenschaften gezielt kombiniert werden.

Dabei entstehen Spritzgussteile 07 mit streng getrennten Komponentenbereichen, indem zunächst ein unfertiger Vorspritzling, nämlich die mindestens eine elastische Partie 06 als Abstandshalter 05 oder das Leuchtenbauteil 04 erzeugt wird, der dann in einem weiteren Schritt mit einer anderen Komponente, nämlich - je nachdem, was noch fehlt - der Komponente für das verbleibende Leuchtenbauteil 04 oder die mindestens eine elastische Partie 06 teilweise um- und/oder über- und damit angespritzt wird.

Hierbei handelt es sich um ein Mehrrohstoff-Spritzgießen, bei dem unterschiedliche Werkstoffe zu einem das Leuchtenbauteil 04 und den mindestens einen als Spaltbegrenzer vorgesehenen Abstandshalter 05 umfassenden Spritzgussteil 07 verarbeitet werden, wobei eine Hart-Weich-Verbindung zwischen dem mindestens einen durch eine elastische Partie 06 gebildeten Abstandshalter 05 und dem aus einer bei Einsatztemperatur fest verfestigenden Komponente hergestellten Leuchtenbauteil 04 erzielt wird.

Besonders bevorzugt sieht das Verfahren vor, dass in dem ersten Verfahrensschritt I zunächst mindestens eine elastische Partie 06 als Abstandshalter 05 durch Spritzgießen einer ersten, in diesem Fall elastisch verfestigenden Komponente hergestellt wird, und anschließend in dem auf den anschließenden zweiten Verfahrensschritt II folgenden dritten Verfahrensschritt III die mindestens eine als Abstandshalter 05 vorgesehene elastische Partie 06 vom Leuchtenbauteil 04 durch Spritzgießen einer zweiten Komponente an die mindestens eine elastische Partie 06 als Abstandshalter 05 teilweise umspritzt oder überspritzt wird, wobei durch letzteres das Leuchtenbauteil 04 an die mindestens eine elastische Partie 06 als Abstandshalter 05 angespritzt wird.

Eine Ausgestaltung des Verfahrens sieht hierbei in einem wie durch einen gestrichelten Pfeil D in Fig. 7 angedeutet auf den zweiten Verfahrensschritt II folgenden und noch vor dem dritten Verfahrensschritt III auszuführenden Zwischenschritt V vor, dass die mindestens eine durch Spritzgießen einer ersten, in diesem Fall elastisch verfestigenden Komponente im ersten Verfahrensschritt I zunächst hergestellte, als Abstandshalter 05 vorgesehene elastische Partie 06 nach dem Spritzgießen der ersten Komponente in eine neue, auch als Werkzeugkavität oder kurz Werkzeug bezeichnete Spritzgussform umgesetzt wird, welche einen oder mehrere eigens zur Aufnahme der mindestens einen elastischen Partie 06 vorgesehene Plätze aufweist.

Anschließend sieht diese Ausgestaltung des Verfahrens im wie durch einen gestrichelten Pfeil E in Fig. 7 angedeutet nunmehr auf den Zwischenschritt V folgenden dritten Verfahrensschritt III vor, dass das Leuchtenbauteil 04 an die mindestens eine elastische Partie 06 durch Spritzgießen der zweiten Komponente in der neuen Spritzgussform angespritzt wird oder die mindestens eine elastische Partie 06 vom Leuchtenbauteil 04 durch Spritzgießen der zweiten Komponente in der neuen Spritzgussform teilweise umspritzt wird.

Das Umsetzen der als Abstandshalter vorgesehenen elastischen Partie nach dem Spritzgießen der ersten Komponente in die neue Spritzgussform, welche einen oder mehrere eigens zur Aufnahme der mindestens einen elastischen Partie vorgesehene Plätze aufweist, kann manuell oder automatisiert vorgenommen werden.

Gemäß einer weiteren Ausgestaltung des Verfahrens ist vorgesehen, durch Mehrkomponenten-Spritzgießen in einer anhand eines oder mehrerer Schieber entsprechend unterteilbaren, die äußere Geometrie des Leuchtenbauteils 04 und der mindestens einen stoffschlüssig durch Spritzgießen mit diesem verbundenen elastischen Partie 06 als Abstandshalter 05 vorgebenden Spritzgussform im ersten Verfahrensschritt I zunächst mindestens eine elastische Partie 06 als Abstandshalter 05 durch Spritzgießen einer ersten Komponente herzustellen, und anschließend nach dem zumindest teilweise Verfestigen der ersten Komponente im zweiten Verfahrensschritt II in einem wie durch einen gestrichelten Pfeil F in Fig. 7 angedeutet auf den zweiten Verfahrensschritt II folgenden alternativen Zwischenschritt VI den mindestens einen die Spritzgussform unterteilenden Schieber zu öffnen und im wie durch einen gestrichelten Pfeil G in Fig. 7 dargestellt auf den alternativen Zwischenschritt VI folgenden dritten Verfahrensschritt III ein Leuchtenbauteil 04 an die mindestens eine als Abstandshalter 05 vorgesehene elastische Partie 06 durch Spritzgießen einer zweiten Komponente an das mindestens eine durch Spritzgießen der ersten Komponente im ersten Verfahrensschritt I bereits hergestellte Teil anzuspritzen, oder das Leuchtenbauteil 04 mit der mindestens einen elastischen Partie 06 als Abstandshalter 05 oder die mindestens eine elastische Partie 06 als Abstandshalter 05 mit dem Leuchtenbauteil 04 durch Spritzgießen einer zweiten Komponente zum Teil um das mindestens eine im ersten Verfahrensschritt I durch Spritzgießen der ersten Komponente bereits hergestellte Teil teilweise zu umspritzen.

Die für diese weitere Ausgestaltung des Verfahrens vorgesehene Spritzgussform gibt demnach die äußere Geometrie des fertigen, das Leuchtenbauteil 04 mit der mindestens einen durch Spritzgießen stoffschlüssig mit diesem verbundenen elastischen Partie 06 als Abstandshalter 05 umfassenden Spritzgussteils 07 vor.

Hierzu kann eine Spritgießmaschine mit zwei oder auch mehreren Spritzeinheiten aber nur einer Schließeinheit vorgesehen werden. Die Spritzgussteile 07 bestehend aus jeweils einem Leuchtenbauteil mit mindestens einem an diesem angeordneten, als Spaltbegrenzer vorgesehenen Abstandshalter 05 können damit kostengünstig mit nur einem Werkzeug in einem Arbeitsgang hergestellt werden. Die verschiedenen Komponenten für das Leuchtenbauteil 04 und die mindestens eine elastische Partie 06 als Abstandshalter 05 können durch eine einzige Spezialdüse eingespritzt oder an verschiedenen Stellen ins Werkzeug eingebracht werden.

Denkbar ist in diesem Zusammenhang, dass eine als Dreh- und/oder Verschiebetechnik bezeichnete Abfolge beim Mehrkomponenten-Spritzgießen angewandt wird, bei der das Werkzeug oder beispielsweise nur ein Teil des Werkzeugs, wie etwa die Hälfte des Werkzeugs, nach einem das Spritzgießen der ersten Komponente besorgenden ersten Spritzvorgang in eine neue Lage gedreht oder verschoben wird und der so erzeugte Vorspritzling in der neuen Lage in einem das Spritzgießen der zweiten Komponente besorgenden zweiten Spritzvorgang mit einer weiteren Düse überspritzt wird.

Denkbar ist in diesem Zusammenhang, dass alternativ eine als Kernrückzugstechnik bezeichnete Abfolge beim Mehrkomponenten-Spritzgießen angewandt wird, bei der nach einem das Spritzgießen der ersten Komponente besorgenden ersten Spritzvorgang ein Kern im Werkzeug zurückgezogen wird, um Platz für die mit einem das Spritzgießen der zweiten Komponente besorgenden zweiten Spritzvorgang neu hinzukommende Komponente zu schaffen.

Die voranstehenden Ausführungen, wonach etwa das Leuchtenbauteil 04 an die mindestens eine elastische Partie 06 durch Spritzgießen der zweiten Komponente beispielsweise in einer neuen Spritzgussform angespritzt, oder die mindestens eine elastische Partie 06 vom Leuchtenbauteil 04 durch Spritzgießen der zweiten Komponente beispielsweise in einer neuen Spritzgussform teilweise umspritzt wird, werden nachfolgend unter Bezugnahme auf Fig. 3, Fig. 4, Fig. 5 und Fig. 6 näher erläutert.

Allgemein kann vorgesehen sein, dass durch Spritzgießen der zweiten Komponente das Leuchtenbauteil 04 an die mindestens eine als Abstandshalter 05 vorgesehene elastische Partie 06 an das mindestens eine durch Spritzgießen der ersten Komponente bereits hergestellte Teil angespritzt wird, oder dass durch Spritzgießen der zweiten Komponente das mindestens eine durch Spritzgießen der ersten Komponente bereits hergestellte Teil zumindest teilweise von der mindestens einen elastischen Partie 06 als Abstandshalter 05 oder zumindest teilweise von dem Leuchtenbauteil 04 umspritzt wird.

Bei dem in Fig. 3 dargestellten Leuchtenbauteil 04 handelt es sich um ein Leuchtengehäuse 02, welches beispielsweise vermittels Laserdurchstrahlschweißens stoffschlüssig mit einer Lichtscheibe 03 zumindest zu einem Teil einer Fahrzeugleuchte 01 verbunden ist.

Die elastische Partie 06 als Abstandshalter 05 ist beim in Fig. 3 dargestellten, das Leuchtenbauteil 04 und die durch Spritzgießen stoffschlüssig mit diesem verbundene elastische Partie 06 als Abstandshalter 05 umfassenden fertigen Spritzgussteil 07 teilweise vom als Leuchtengehäuse 02 ausgeführten Leuchtenbauteil 04 umspritzt.

Alternativ kann die elastische Partie 06 in eine beim Spritzgießen des Leuchtenbauteils 04 freigehaltene Aufnahme 08 durch Spritzgießen angespritzt sein, wobei das als Leuchtengehäuse 02 ausgeführte Leuchtenbauteil 04 die elastische Partie 06 teilweise umgibt.

Bei dem in Fig. 4 dargestellten Leuchtenbauteil 04 handelt es sich ebenfalls um ein Leuchtengehäuse 02, welches beispielsweise vermittels Laserdurchstrahlschweißens stoffschlüssig mit einer Lichtscheibe 03 zumindest zu einem Teil einer Fahrzeugleuchte 01 verbunden ist.

Die elastische Partie 06 als Abstandshalter 05 und das als Leuchtengehäuse 02 ausgeführte Leuchtenbauteil 04 sind beim in Fig. 4 dargestellten, das Leuchtenbauteil 04 und die durch Spritzgießen stoffschlüssig mit diesem verbundene elastische Partie 06 als Abstandshalter 05 umfassenden fertigen Spritzgussteil 07 aneinander angespritzt.

Hierzu kann die elastische Partie 06 vom Leuchtengehäuse 04 teilweise überspritzt sein, oder die elastische Partie 06 kann an das Leuchtenbauteil 04 angespritzt sein.

In jedem Fall ist das im dritten Verfahrensschritt III hergestellte Teil des Spritzgussteils 07 auf das im ersten Verfahrensschritt I hergestellte, einen Vorspritzling bildenden Teil durch Anspritzen der zweiten Komponente an das durch Spritzgießen der ersten Komponente hergestellte Teil aufgesetzt.

Bei dem in Fig. 5 dargestellten Leuchtenbauteil 04 handelt es sich beispielsweise um ein Leuchtengehäuse 02 oder um eine Lichtscheibe 03 einer Fahrzeugleuchte 01.

Die elastische Partie 06 als Abstandshalter 05 ist vom Leuchtenbauteil 04 teilweise umschlossen.

Hierzu kann die elastische Partie 06 des in Fig. 5 dargestellten Leuchtenbauteils 04 in eine im ersten Verfahrensschritt I beim Spritzgießen des Leuchtenbauteils 04 freigehaltene Aufnahme 08 durch Spritzgießen angespritzt sein, wobei das Leuchtenbauteil 04 die elastische Partie 06 teilweise umgibt.

Alternativ ist die elastische Partie 06 als Abstandshalter 05 beim in Fig. 5 dargestellten, das Leuchtenbauteil 04 und die durch Spritzgießen stoffschlüssig mit diesem verbundene elastische Partie 06 als Abstandshalter 05 umfassenden fertigen Spritzgussteil 07 teilweise vom Leuchtenbauteil 04 umspritzt.

Bei dem in Fig. 6 dargestellten Leuchtenbauteil 04 handelt es sich ebenfalls beispielsweise um ein Leuchtengehäuse 02 oder um eine Lichtscheibe 03 einer Fahrzeugleuchte 01.

Bei dem in Fig. 6 dargestellten Leuchtenbauteil 04 ist die elastische Partie 06 in das Leuchtenbauteil 04 eingelassen und teilweise, nämlich bis auf einen über das Leuchtenbauteil 04 hinausragenden Abschnitt 09, von dem Leuchtenbauteil 04 umspritzt.

Hierzu kann die elastische Partie 06 des in Fig. 6 dargestellten Leuchtenbauteils 04 in eine im ersten Verfahrensschritt I beim Spritzgießen des Leuchtenbauteils 04 freigehaltene Aufnahme 08 durch Spritzgießen angespritzt sein, wobei das Leuchtenbauteil 04 die elastische Partie 06 mit Ausnahme deren über das Leuchtenbauteil 04 hinausragenden Abschnitts 09 umgibt.

Alternativ ist die elastische Partie 06 als Abstandshalter 05 beim in Fig. 5 dargestellten, das Leuchtenbauteil 04 und die durch Spritzgießen stoffschlüssig mit diesem verbundene elastische Partie 06 als Abstandshalter 05 umfassenden fertigen Spritzgussteil 07 teilweise vom Leuchtenbauteil 04 umspritzt.

Wichtig ist hervorzuheben, dass die Erfindung eine Integration eines als Spaltbegrenzer vorgesehenen Abstandshalters 05 in den Herstellungsprozess einer Fahrzeug-, insbesondere Heckleuchtenproduktion vorsieht. Der oder die Abstandshalter 05 werden durch Mehrkomponenten-Spritzgießen in einem zur Herstellung eines mit Abstandhaltern 05 zu versehenden Leuchtenbauteils 04 vorgesehenen Spritzguss-Vorgang stoffschlüssig und unverlierbar am Leuchtenbauteil 04 angeordnet. Hierzu werden elastische Partien 06 als Abstandshalter 05 selbst durch Spritzgießen aus einer elastisch verfestigenden Komponente während des Mehrkomponenten-Spritzgießens hergestellt.

Hierdurch entstehen Spritzgussteile 07, welche das Leuchtenbauteil 04 und mindestens eine an diesem durch Spritzgießen stoffschlüssig und verliersicher sowie unverrückbar angeordnete elastische Partie 06 als Abstandshalter 05 umfassen.

Zusammengefasst sieht die Erfindung bevorzugt vor, Abstandshalter 05 als Vorspritzlinge aus einer ersten Komponente beispielsweise im Mehrkomponenten-Spritzguss herzustellen, wobei im Anschluss an eine als Abstandshalter 05 dienende elastische Partie 06 das Leuchtenbauteil 04, an welchem der Abstandshalter 05 zur Anordnung vorgesehen ist, aus einer anderen Komponente angespritzt wird.

Derart vorgefertigte Abstandshalter 05 können direkt in dem jeweiligen Spritzgusswerkzeug in einem ersten Spritzgussvorgang hergestellt oder nach deren Herstellung in das jeweilige Spritzgusswerkzeug des jeweiligen herzustellenden und bei fertiger Fahrzeugleuchte mit einem oder mehreren Abstandshaltern 05 zu versehenden Leuchtenbauteils 04 eingelegt und anschließend mit dem als Komponente des jeweiligen Leuchtenbauteils 04 vorgesehenen Werkstoff verspritzt werden.

Wichtig ist hervorzuheben, dass erfindingsgemäß vorgesehen ist, dass als elastische Partien 06 vorgesehene Vorspritzlinge bereits selbst durch Mehrkomponenten-Spritzgießen hergestellt sind, wobei an einen aus elastischem Werkstoff bestehenden Teil der elastischen Partie 06 ein Teil aus dem für das Leuchtenbauteil 04 vorgesehenen Werkstoff angespritzt wird. Hierdurch gehen die elastische Partie 06 und das Leuchtenbauteil 04 beim anschließenden Anspritzen des Leuchtenbauteils 04 an die elastische Partie 06 eine noch bessere stoffschlüssige Verbindung ein.

Das Verfahren und/oder das Leuchtenbauteil 04 und/oder die Fahrzeugleuchte 01 können alternativ oder zusätzlich zu den voranstehenden Ausführungen einzelne oder eine Kombination mehrerer einleitend in Verbindung mit dem Stand der Technik und/oder in einem oder mehreren der zum Stand der Technik erwähnten Dokumente und/oder in der voranstehenden Beschreibung beschriebene Merkmale aufweisen.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte
- 02: Leuchtengehäuse
- 03: Lichtscheibe
- 04: Leuchtenbauteil
- 05: Abstandshalter
- 06: elastische Partie
- 07: Spritzgussteil
- 08: Aufnahme
- 09: Abschnitt

## Patentansprüche

1. Verfahren zur Herstellung eines Leuchtenbauteils (04) mit mindestens einem an diesem angeordneten, als Spaltbegrenzer vorgesehenen Abstandshalter (05), welches vorsieht, zunächst mindestens eine elastische Partie (06) als Abstandshalter (05) durch Spritzgießen einer ersten Komponente herzustellen, und anschließend nach dem zumindest teilweise Verfestigen der ersten Komponente das Leuchtenbauteil (04) an die mindestens eine elastische Partie (06) als Abstandshalter (05) durch Spritzgießen einer zweiten Komponente an das mindestens eine durch Spritzgießen der ersten Komponente bereits hergestellte Teil anzuspritzen oder das mindestens eine durch Spritzgießen der ersten Komponente bereits hergestellte Teil durch Spritzgießen der zweiten Komponente teilweise zu umspritzen, wobei als elastische Partien (06) vorgesehene Vorspritzlinge bereits selbst durch Mehrkomponenten-Spritzgießen hergestellt sind, wobei an einen aus elastischem Werkstoff bestehenden Teil der elastischen Partie (06) ein Teil aus dem für das Leuchtenbauteil (04) vorgesehenen Werkstoff angespritzt wird.

2. Verfahren nach Anspruch 1, wobei es anschließend vorsieht ein zumindest teilweises Verfestigen auch der zweiten Komponente abzuwarten und dann das fertige und mit mindestens einer elastischen Partie (06) als Abstandshalter (05) ausgestattete Leuchtenbauteil (04) einer zumindest zum anspritzen der zweiten Komponente an das mindestens eine durch Spritzgießen der ersten Komponente bereits hergestellte Teil verwendete Spritzgussform zu entnehmen.

3. Verfahren nach Anspruch 1 oder 2, wobei vorgesehen ist, durch Mehrkomponenten-Spritzgießen zunächst mindestens eine elastische Partie (06) als Abstandshalter (05) durch Spritzgießen einer ersten Komponente herzustellen, und anschließend nach dem zumindest teilweise Verfestigen der ersten Komponente ein Leuchtenbauteil (04) an die mindestens eine als Abstandshalter (05) vorgesehene elastische Partie (06) durch Spritzgießen einer zweiten Komponente an das mindestens eine durch Spritzgießen der ersten Komponente bereits hergestellte Teil anzuspritzen oder das mindestens eine durch Spritzgießen der ersten Komponente bereits hergestellte Teil durch Spritzgießen der zweiten Komponente teilweise zu umspritzen.

4. Verfahren nach Anspruch 3, wobei zunächst mindestens eine elastische Partie (06) als Abstandshalter (05) durch Spritzgießen einer ersten Komponente hergestellt wird, und anschließend das Leuchtenbauteil (04) an die mindestens eine als Abstandshalter (05) vorgesehene elastische Partie (06) durch Spritzgießen einer zweiten Komponente an die mindestens eine elastische Partie (06) als Abstandshalter (05) angespritzt wird, oder die mindestens eine elastische Partie (06) vom Leuchtenbauteil (04) durch Spritzgießen der zweiten Komponente teilweise umspritzt wird.

5. Verfahren nach Anspruch 4, wobei die mindestens eine durch Spritzgießen einer ersten Komponente zunächst hergestellte, als Abstandshalter (05) vorgesehene elastische Partie (06) nach dem Spritzgießen der ersten Komponente in eine neue Spritzgussform umgesetzt wird, welche einen oder mehrere eigens zur Aufnahme der mindestens einen elastischen Partie (06) vorgesehene Plätze aufweist, und anschließend das Leuchtenbauteil (04) an die mindestens eine elastische Partie (06) durch Spritzgießen der zweiten Komponente in der neuen Spritzgussform angespritzt wird oder die mindestens eine elastische Partie (06) vom Leuchtenbauteil (04) durch Spritzgießen der zweiten Komponente in der neuen Spritzgussform teilweise umspritzt wird.

6. Verfahren nach einem der Ansprüche 1 bis 4, wobei vorgesehen ist, durch Mehrkomponenten-Spritzgießen in einer anhand eines oder mehrerer Schieber entsprechend unterteilbaren, die äußere Geometrie eines das Leuchtenbauteil (04) und des mindestens einen Abstandshalters (05) umfassenden Spritzgussteils (07) vorgebenden Spritzgussform zunächst mindestens eine elastische Partie (06) als Abstandshalter (05) durch Spritzgießen einer ersten Komponente herzustellen, und anschließend nach dem zumindest teilweise Verfestigen der ersten Komponente den mindestens einen die Spritzgussform unterteilenden Schieber zu öffnen und ein Leuchtenbauteil (04) an die mindestens eine als Abstandshalter (05) vorgesehene elastische Partie (06) durch Spritzgießen einer zweiten Komponente an das mindestens eine durch Spritzgießen der ersten Komponente bereits hergestellte Teil anzuspritzen oder durch Spritzgießen der zweiten Komponente teilweise um das mindestens eine durch Spritzgießen der ersten Komponente bereits hergestellte Teil zu umspritzen.

7. Leuchtenbauteil (04) mit mindestens einem an diesem angeordneten, als Spaltbegrenzer vorgesehenen Abstandshalter (05), wobei der oder die Abstandshalter (05) jeweils aus einer oder mehreren elastischen Partien (06) bestehen, die gemäß einem Verfahren nach einem der Ansprüche 1 bis 6 unmittelbar stoffschlüssig und verliersicher am Leuchtenbauteil (04) angeordnet sind.

8. Leuchtenbauteil nach Anspruch 7, wobei es sich bei dem Leuchtenbauteil (04) um ein Leuchtengehäuse (02) oder um eine Lichtscheibe (03) handelt.

9. Leuchtenbauteil nach Anspruch 8, wobei die Abstandhalter (05) bei Leuchtengehäusen (02) im rückwärtigen und/oder seitlichen, bei fertig in einer zu deren Festlegung an einer Fahrzeugkarosserie vorgesehenen Einbauöffnung eingebrachter Fahrzeugleuchte (01) nicht einsehbaren Bereich des Leuchtengehäuses (02) angeordnet sind, und bei Lichtscheiben (03) an deren umlaufendem Rand und/oder in einem der Vorderseite der Lichtscheibe (03) abgewandten Randbereich angeordnet sind.

10. Fahrzeugleuchte (01) mit einem von einem Leuchtengehäuse (02) und einer Lichtscheibe (03) zumindest teilweise umschlossenen Leuchteninnenraum, welcher wenigstens ein zur Erfüllung mindestens einer Lichtfunktion der Fahrzeugleuchte (01) vorgesehenes Leuchtmittel und/oder wenigstens ein einer vorgegebenen Lichtverteilung mindestens einer Lichtfunktion der Fahrzeugleuchte (01) beitragendes Leuchtmittel zumindest teilweise beherbergt, wobei zumindest ein Leuchtenbauteil (04) mit mindestens einem an diesem angeordneten, als Spaltbegrenzer gegenüber einer eine Einbauöffnung begrenzenden Karosseriewandung vorgesehenen Abstandshalter (05) ausgestattet ist, wobei jeder Abstandshalter (05) aus einer oder mehreren elastischen Partien (06) besteht, und das mit zumindest einem Abstandshalter (05) ausgestattete Leuchtenbauteil (04) gemäß einem Verfahren nach einem der Ansprüche 1 bis 6 hergestellt ist.

## Claims

1. A method for producing an illumination component (04) with at least one spacer (05) arranged thereon, which spacer (05) is being provided as a gap limiter, which method provides, that initially at least one elastic part (06) is being produced as spacer (05) by injection moulding of a first component, and subsequently after the at least partial solidification of the first component the illumination component (04) is injected onto the at least one elastic part (06) as a spacer (05) by injection moulding of a second component onto the at least one part already produced by injection moulding of the first component or by partially overmoulding the at least one part already produced by injection moulding of the first component by injection moulding of the second component, wherein pre-mouldings provided to be the elastic parts (06) are themselves already produced by multi-component injection moulding, wherein a part of the material provided for the illumination component (04) is injected onto a part of the elastic part (06) consisting of elastic material.

2. The method as recited in claim 1, wherein it is then provided to await an at least partial solidification also of the second component and subsequently remove the finished illumination component (04) from an injection mould, which illumination component (04) is provided with at least one elastic part (06) as spacer (05), which injection mould is used at least for injecting the second component onto the at least one part already produced by injection moulding of the first component.

3. The method as recited in claim 1 or 2, wherein it is provided to initially produce by multi-component injection moulding at least one elastic part (06) as a spacer (05) by injection moulding of a first component, and wherein subsequently after the at least partial solidification of the first component an illumination component (04) is injection-moulded onto the at least one elastic part (06) provided as a spacer (05) by injection moulding of a second component onto the at least one part already produced by injection moulding of the first component, or to partially overmould the at least one part already produced by injection moulding of the first component by injection moulding of the second component.

4. The method as recited in claim 3, wherein initially at least one elastic part (06) is produced as a spacer (05) by injection moulding of a first component, and wherein subsequently the illumination component (04) is injected onto the at least one elastic part (06) provided as spacer (05) by injection moulding of a second component onto the at least one elastic part (06) provided as spacer (05), or the at least one elastic part (06) of the illumination component (04) is partially overmoulded by injection moulding of the second component.

5. The method as recited in claim 4, wherein the at least one elastic part (06) initially produced by injection moulding of a first component and provided as a spacer (05) is transferred, after injection moulding of the first component, into a new injection mould, which new injection mould has one or more locations specifically provided for receiving the at least one elastic part (06), and wherein subsequently the illumination component (04) is injection-moulded onto the at least one elastic part (06) by injection moulding of the second component within the new injection mould or wherein the at least one elastic part (06) of the illumination component (04) is partially overmoulded by injection moulding of the second component within the new injection mould.

6. The method as recited in one of the claims 1 to 4, wherein it is provided to initially produce at least one elastic part (06) as a spacer (05) by injection moulding a first component by multi-component injection moulding within an injection mould, which injection mould can be subdivided accordingly by means of one or more slides and which injection mould defines the outer geometry of an injection moulded part (07) comprising the illumination component (04) and the at least one spacer (05), and subsequently after the at least partial solidification of the first component opening the at least one slide dividing the injection mould and injecting an illumination component (04) onto the at least one elastic part (06) provided as a spacer (05) by injection moulding a second component onto the at least one part already produced by injection moulding the first component or by overmoulding the second component partially around the at least one part already produced by injection moulding the first component.

7. An illumination component (04) with at least one spacer (05) arranged thereon, which spacer (05) is provided as a gap limiter, the spacer or spacers (05) each consisting of one or more elastic parts (06), which elastic parts (06) are arranged directly on the illumination component (04) in a material-locking and loss-proof manner by a method according to one of claims 1 to 6.

8. The illumination component as recited in claim 7, wherein the illumination component (04) is a light housing (02) or a light disk (03).

9. The illumination component as recited in claim 8, wherein in the case of light housings (02) the spacers (05) are arranged in the rear and/or lateral region of the light housing (02), which region of the light housing (02) cannot be seen when the vehicle light (01) is completely inserted within an installation opening provided for fixing the vehicle light (01) to a vehicle chassis, and wherein in the case of light discs (03) the spacers (05) are arranged on their peripheral edge and/or in an edge region remote from the front side of the light disc (03).

10. A vehicle light (01) with a light interior space, which light interior space is at least partially enclosed by a light housing (02) and a light disc (03) and which light interior space at least partially accommodates at least one lighting means provided to fulfil at least one lighting function of the vehicle light (01) and/or at least one lighting means contributing to a predetermined light distribution of at least one lighting function of the vehicle light (01), at least one illumination component (04) being equipped with at least one spacer (05) arranged thereon and provided as a gap limiter with respect to a vehicle chassis wall delimiting an installation opening, each spacer (05) consisting of one or more elastic parts (06), and the illumination component (04) being equipped with at least one spacer (05), which illumination component (04) is produced according to a method as recited in one of claims 1 to 6.

## Revendications

1. Procédé de fabrication d'un composant de lampe (04) comprenant au moins un écarteur (05) disposé sur celui-ci et prévu en tant que limiteur de fente, qui prévoit de fabriquer d'abord au moins une partie élastique (06) comme écarteur (05) en moulant par injection un premier composant, et puis, après la solidification au moins partielle dudit premier composant, de mouler par injection le composant de lampe (04) sur ladite au moins une partie élastique (06) comme écarteur (05), en moulant par injection un deuxième composant sur ladite au moins une pièce déjà fabriquée par moulage par injection du premier composant, ou de surmouler par injection en partie ladite au moins une pièce déjà fabriquée par moulage par injection du premier composant, par un moulage par injection du deuxième composant, dans lequel des pièces pré-moulées par injection prévues comme parties élastiques (06) sont elles-mêmes déjà produites par moulage par injection à plusieurs composants, dans lequel une partie faite du matériau prévu pour le composant de lampe (04) est moulée par injection sur une partie de la partie élastique (06), qui est faite de matériau élastique.

2. Procédé selon la revendication 1, dans lequel il prévoit ensuite d'attendre une solidification au moins partielle également du deuxième composant et, puis, de retirer le composant de lampe (04) fini et équipé d'au moins une partie élastique (06) comme écarteur (05), d'un moule pour injection utilisé au moins pour mouler par injection le deuxième composant sur ladite au moins une pièce déjà fabriquée par moulage par injection du premier composant.

3. Procédé selon la revendication 1 ou 2, dans lequel il est prévu de fabriquer d'abord, par moulage par injection à plusieurs composants, au moins une partie élastique (06) comme écarteur (05) en moulant par injection un premier composant, et, puis, après la solidification au moins partielle du premier composant, de mouler par injection un composant de lampe (04) sur ladite au moins une partie élastique (06) prévue comme écarteur (05), en moulant par injection un deuxième composant sur ladite au moins une pièce déjà fabriquée par moulage par injection du premier composant, ou de surmouler par injection en partie ladite au moins une pièce déjà fabriquée par moulage par injection du premier composant, par un moulage par injection du deuxième composant.

4. Procédé selon la revendication 3, dans lequel, d'abord, au moins une partie élastique (06) comme écarteur (05) est produite par moulage par injection d'un premier composant, et, puis, le composant de lampe (04) est moulé par injection sur ladite au moins une partie élastique (06) prévue comme écarteur (05), en moulant par injection un deuxième composant sur ladite au moins une partie élastique (06) comme écarteur (05), ou ladite au moins une partie élastique (06) est surmoulée par injection en partie du composant de lampe (04) en moulant par injection le deuxième composant.

5. Procédé selon la revendication 4, dans lequel on fait passer ladite au moins une partie élastique (06) fabriquée d'abord par moulage par injection d'un premier composant et prévue comme écarteur (05) dans un nouveau moule pour injection, après le moulage par injection du premier composant, qui présente une ou plusieurs places spécialement prévue(s) pour recevoir ladite au moins une partie élastique (06), et, ensuite, le composant de lampe (04) est moulé par injection sur ladite au moins une partie élastique (06) en moulant par injection le deuxième composant dans le nouveau moule pour injection, ou ladite au moins une partie élastique (06) est surmoulée par injection en partie du composant de lampe (04) en moulant par injection le deuxième composant dans le nouveau moule pour injection.

6. Procédé selon l'une quelconque des revendications 1 à 4, dans lequel il est prévu de fabriquer d'abord au moins une partie élastique (06) comme écarteur (05), en moulant par injection un premier composant, par un moulage par injection à plusieurs composants à l'intérieur d'un moule pour injection qui peut être divisé de manière correspondante l'aide d'un ou de plusieurs tiroirs et qui définit la géométrie extérieure d'une pièce moulée par injection comprenant le composant de lampe (04) et ledit au moins un écarteur (05), et, puis, après la solidification au moins partielle du premier composant, d'ouvrir ledit au moins un tiroir divisant le moule pour injection et de mouler par injection un composant de lampe (04) sur ladite au moins une partie élastique (06) prévue comme écarteur (05), en moulant par injection un deuxième composant sur ladite au moins une pièce déjà produite par moulage par injection du premier composant ou de surmouler par injection en partie ladite au moins une pièce déjà produite par moulage par injection du premier composant, par moulage par injection du deuxième composant.

7. Composant de lampe (04) comprenant au moins un écarteur (05) disposé sur celui-ci et prévu comme limiteur de fente, dans lequel le ou les écarteur(s) (05) se composent chacun d'une ou de plusieurs parties élastiques (06) qui sont disposées, selon un procédé selon l'une quelconque des revendications 1 à 6, directement par liaison de matière et de manière imperdable sur le composant de lampe (04).

8. Composant de lampe selon la revendication 7, dans lequel le composant de lampe (04) est un boîtier de lampe (02) ou une glace (03).

9. Composant de lampe selon la revendication 8, dans lequel, dans le cas de boîtiers de lampe (02), les écarteurs (05) sont disposés dans la zone arrière et/ou latérale du boîtier de lampe (02), qui n'est pas visible lorsque la lampe de véhicule (01) est incorporée dans une ouverture de montage prévue pour la fixer sur une carrosserie de véhicule et, dans le cas de glaces (03), ils sont disposés sur le bord périphérique de celles-ci et/ou dans une zone de bord montrant dans la direction opposée à la face avant de la glace (03).

10. Lampe de véhicule (01) comprenant un volume intérieur de lampe qui est entouré au moins en partie d'un boîtier de lampe (02) et d'une glace (03) et qui loge au moins en partie au moins un moyen lumineux prévu pour remplir au moins une fonction de lumière de la lampe de véhicule (01) et/ou au moins un moyen lumineux contribuant à une répartition de lumière prédéterminée d'au moins une fonction de lumière de la lampe de véhicule (01), dans lequel au moins un composant de lampe (04) est équipé d'au moins un écarteur (05) disposé sur celui-ci et prévu comme limiteur de fente par rapport à une paroi de carrosserie délimitant une ouverture de montage, dans lequel chaque écarteur (05) se compose d'une ou de plusieurs partie(s) élastique(s) (06), et le composant de lampe (04) équipé d'au moins un écarteur (05) est fabriqué selon un procédé selon l'une quelconque des revendications 1 à 6.
